# EUROPEAN PATENT APPLICATION

(11) **EP 1 580 914 A1**
(43) Date of publication of application: **28.09.2005**
(21) Application number: 04007275.3
(22) Date of filing: 26.03.2004
(51) Int. Cl.: H04L 1/00

(54) **Method and system for controlling operation of a network**

(71) Applicant: STMicroelectronics S.r.l., 20041 Agrate Brianza (Milano) (IT)
(72) Inventor: Convertino, Gabriella, 72021 Francavilla Fontana (Brindisi) (IT); Sigona, Francesco, 73039 Tricase (Lecce) (IT); Melpignano, Diego, 20052 Monza (Milano) (IT); Rovati, Fabrizio Simone, 20092 Cinisello Balsamo (Milano) (IT)
(74) Representative: Bosotti, Luciano

(57) **Abstract**

A system for controlling operation of a network such as a WLAN (200, 300) where at least one information stream is delivered to at least one user (250, 260; 350, 360) via at least one link exposed to variable operating conditions. The system includes:
- a controller module (410) configured for monitoring the operating conditions (400, 410) of said link, and
- at least one transcoder (210, 310) configured for selectively transcoding (210, 310) the information stream by selectively varying one or more transcoding parameters as a function of the operating conditions monitored.

## Description

### Field of the invention

The present invention relates to communication systems, and was developed by paying specific attention to the possible application to Wireless LAN (Local Area Network) systems, such as e.g. Wireless LAN (WLAN) transmission systems adapted to provide audio/video (A/V) streaming services.

### Description of the related art

While WLAN systems are becoming increasingly popular not only for data, but also for real-time streaming applications, the possible variations of the wireless link conditions in a home environment (due to e.g. propagation effects, interference and traffic generated by other devices) make the bandwidth available for Audio/Video streaming a highly variable factor.

Consumer Electronics (CE) manufacturers are thus interested in using a domestic WLANs to distribute audiovisual content among entertainment devices and PCs.

However, the lack of Quality of Service (QoS) support in the standard as well as the variable conditions of the shared wireless channel make real-time Audio/Video WLAN distribution in the home a challenging task.

In fact streaming media over a Wireless LAN is relatively simple in the ideal case of a channel with a limited error rate and without interference. In practice, however, the attenuation of the signal caused by walls and multipath effects of a closed environment like the home, sometimes result in a high (and variable) bit error rate. Furthermore, as wireless equipment in the 2.4 GHz ISM band is becoming commonplace, multiple users may be sharing the same radio spectrum in an uncoordinated way, thereby producing mutual interference.

The effect of a plurality of devices sharing the radio spectrum and the variable bit error rates associated with the wireless links result in the bandwidth available for streaming audiovisual content being not constant.

The consequence of transmission errors and interference is twofold. Firstly, there is a bandwidth waste caused by frame retransmissions. Secondly, such retransmissions increase the jitter of frames of a real-time flow that arrive at the receiver: a bigger buffer is therefore needed to compensate for delay variations.

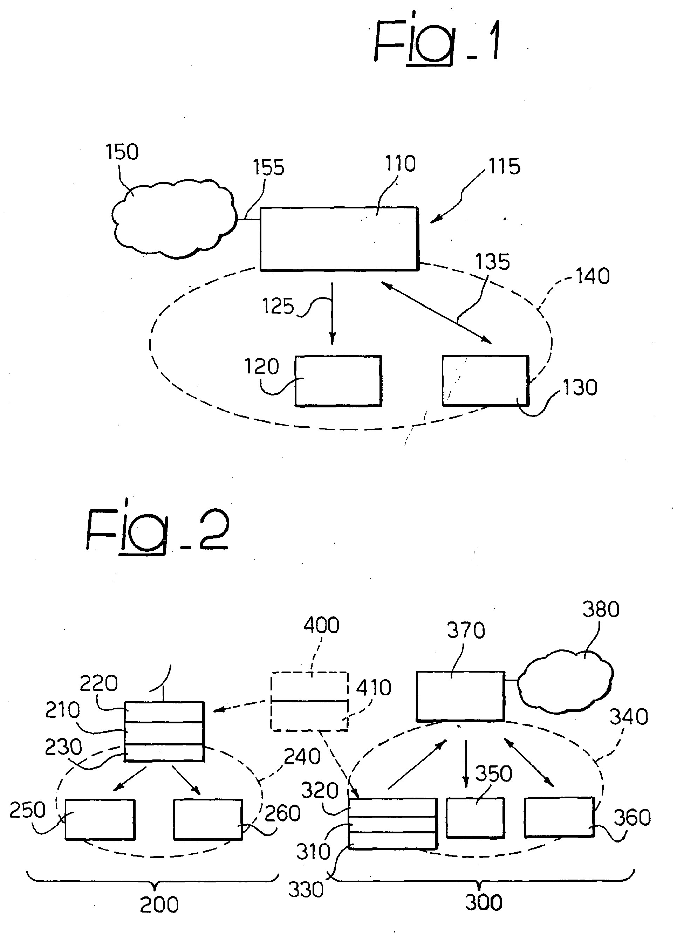

A typical home networking scenario is depicted in Figure 1, where a Set-Top Box (STB) 110, that also plays the role of the access point of a WLAN, is receiving an input stream (e.g. TV signals from an aerial) and distributes it to one or more TV-sets 120 in a home, by way of a connection 125 included in a Wireless LAN network 140. At the same time, a laptop 130 is accessing the Internet 150 through the WLAN access point 110 using a connection 135 also included in the WLAN 140.

In this scenario, the TCP/IP connection 155 could use a significant portion of the radio bandwidth, especially if the Internet connection is broadband.

This situation results in a decrease in the bandwidth available for the real-time stream. In the common case where the video source cannot adapt the source-coding rate to the variable channel capacity, a loss of packets is experienced at the receiver, with an unacceptable video quality. This phenomenon may be "bursty" and not predictable.

Those of skill in the art will appreciate that other home WLAN topologies than the one presented in Figure 1 are possible, wherein the same remarks made in the foregoing identically apply.

Several solutions have been proposed to solve the problem of robust real-time streaming over packet networks (including Wireless LANs).

By way of example, in http://www.vixs.com/prod xcode.html, an arrangement is described where a transcoder (Xcode chip) uses channel sampling and real-time transcoding and transrating of MPEG-1, MPEG-2 or MPEG-4 video streams to give a graceful degradation in overall picture quality in response to instantaneous and generally reduced available channel bit-rates. Once installed, the Xcoder performs channel monitoring to detect instances of reduced channel bit-rate and notifies the controller (a MIPS32 Kmc) of any deviations. The controller then instructs a dedicated transcoding/transrating processor to alter the encoding scheme and level of encoding in real-time to guarantee the 30 frames/s.

The arrangement in question aims at guaranteeing 30 frames per second in all situations. In fact, when scenes with low motion are being transmitted, frames can be skipped without noticeable quality degradation and with a significant bandwidth saving. Of course, this approach implies that the receiver is able to deal with skipped frames properly.

In US-A-20020054578 a "cross-layer" approach for adapting multimedia streaming resource allocation to varying channel conditions in a 3G W-CDMA (Wideband Code Division Multiple Access) system is described. That approach can either minimize distortion or power and specifically targets hybrid delay-constrained ARQ (Automatic Retransmission Request) and FEC (Forward Error Correction) mechanisms that are applied to base layers and enhancements layers of a scalable video stream. In particular, the adaptation of the system consists of a dynamic allocation of bits to source coding and channel coding depending on measured channel conditions. Source coding bit-rate is varied using "Fine Grained Scalability" and not transcoding as in the invention solution. Furthermore this system is tightly coupled with the 3G cellular communication standard.

In US-A-20030018794 a system comprising a streaming server, a network gateway and a wireless host is described, where the wireless host and the gateway cooperate to inform the server about congestion in the network and adverse conditions in the wireless channel. As a response to these events, the streaming server can add more or less partial checksums to the video payload depending on the reported bit error rate and can retransmit packets when these are dropped in the wireless link. Therefore the streaming server is adapted to perform retransmissions of video packets that have been lost either because of network congestion or because of high bit error rates in the wireless link. This system inevitably requires client feedback to estimate the network conditions.

In US-A-20030067872 a system for adapting the characteristics of streaming sources based on network congestion feedback is presented. There, network congestion is estimated by the client that is receiving the media stream and it is reported back to the server.

In US-B-6 049 549 a media control approach is described where streaming of content with high QoS demands is adapted to changing transmission medium characteristics. That approach involves a resource manager that admits flows according to available resources and a polling manager that polls stations according to their traffic profile. Since Wireless LANs use a CSMA/CA-type (Carrier Sense Multiple Access Collision Avoidance) MAC, the concept of polling is not applicable in this context without changes in the IEEE802.11 MAC. The system presented in US-B-6 049 549 is adaptive only in the sense the polling sequence is changed according to the monitored data transmissions of the stations, i.e. the video stream being transmitted is not affected by such changes.

### Object and summary of the invention

The object of the present invention is thus to provide an improved wireless transmission system for optimized Audio/Video stream, able e.g. to dynamically vary the bit-rate of MPEG (Moving Picture Experts Group) encoded streams depending on the wireless link conditions.

According to the present invention, the above object is achieved by means of a method having the features set forth in the claims that follow. The invention also relates to a corresponding system, a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

A preferred embodiment of the invention involves the use of a so-called Cross-Layer Controller (CLC) that operates on information coming from different layers of a protocol stack and which is able to set critical parameters in various processing blocks in a dynamic way. The CLC operates in strict coordination with the transcoder, the channel estimator and the device used.to split in packets the stream. All the blocks above can be implemented in a System on Chip that resides in the WLAN access point or in a Consumers Electronic CE device (e.g. a Set-Top Box) that is intended to distribute Audio/Video content in the home.

Specifically, the arrangement described herein is based on an architecture of the transmission system where the Cross-Layer Controller (CLC) block estimates the Wireless LAN conditions, calculates the bandwidth available for Audio/Video streaming and consequently drives a A/V transcoder. The transcoder can vary the bit-rate at which the A/V stream is encoded and/or possibly reduce the spatial and/or temporal resolution thereof.

The combination of CLC and video transcoder can be integrated in a chipset to be used in such devices as set-top boxes and WLAN (Wireless LAN) access point that offer optimized A/V streaming support, thereby providing product differentiation with respect to standard WLAN equipment.

In the arrangement described herein the channel conditions are estimated by the streaming server without the cooperation of the client. The main advantage of that solution lies in that no dedicated protocol is needed between the server and the client to report network congestion feedback.

A preferred embodiment of the arrangement described herein uses a transcoder in order to obtain a compressed video stream with a bit-rate following the variations in the wireless bandwidth. Such a strategy typically involves: i) a channel estimator to compute the bandwidth available for Audio/Video streaming in a Wireless LAN, ii) a transcoder to dynamically change the bit-rate of the compressed stream and iii) a streaming server that splits the A/V content in packets and transmits such packets according to the estimated available bandwidth. The operations above are properly coordinated to guarantee an acceptable quality of the received images.

### Brief description of the annexed-drawings

The invention will now be described, by way of example only, by referring to the enclosed figures of drawing, wherein:
- Figure 1 showing a typical WLAN home networking scenario, has been described in the foregoing,
- Figure 2 shows the transcoding function in the overall system architecture of the arrangement described herein,
- Figure 3 is a block diagram that explains the Cross-Layer Controller as used in the arrangement described herein, and
- Figure 4 is a simplified block diagram of an Access Point included in the arrangement described herein.

### Detailed description of preferred embodiments of the invention

The arrangement described herein includes a transmission system architecture wherein a Cross-Layer Controller (CLC) block estimates the operating conditions of Wireless LAN.

Specifically, an adaptive video transcoder is added to the WLAN access point or station. This is able to dynamically vary the bit-rate of MPEG encoded streams depending on the wireless link conditions as measured by a dedicated channel monitor software component.

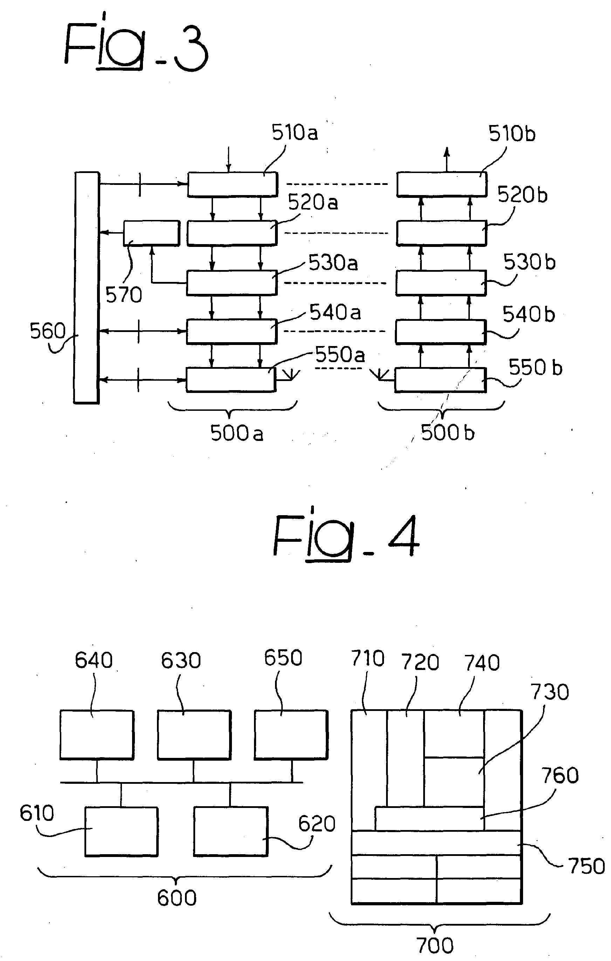

Figure 2 shows two possible home network topologies, 200 and 300, wherein transcoder blocks 210 and 310 and a channel estimation block 400 are associated to a digital set top box (STB) 220 and a personal computer (PC) 320, respectively.

On the left side of Figure 2, a video streamer 230 is located in the STB that transmits a video stream received to a TV set 250 using a WLAN connection 240. The STB 220 also communicates with a PC 260.

On the right side of Figure 2, a video streamer 330 is located in the PC 320 that transmits the video stream to a TV set 350 using a WLAN connection 340. The PC 320 also communicates with a laptop 360. The block 370 indicates a WLAN access point and block 380 indicates the Internet network.

The transcoder blocks 210 and 310, and multimedia streaming blocks 230 and 330 in both network arrangements are driven by a so-called Cross-Layer Controller (CLC) 410 associated with the channel estimation block 400. The controller 410 processes the wireless channels and autonomously decides what portion of the available bandwidths must be dedicated to the streams.

The transcoder, 210 or 310, is instructed to change accordingly the bit-rate of the video stream or to apply other stream manipulation functions on a GOP-by-GOP (Group of Pictures) basis, so the maximum rate of variations is e.g. approximately 500 ms. The algorithms used by the transcoder to reduce the video bit-rate of a stream are described in detail in the following.

Figure 3 shows two protocol stacks 500a and 500b of the devices that respectively transmit and receive Audio/Video content through each of the WLANs shown.

Specifically the two (transmitter/receiver) stacks in question may relate to operation of either of the transcoders 210 or 310.

In the transmitter protocol stack 500a the transmitter, (designated xcoder 510a in the following), takes an MPEG-2 video elementary stream indicated I (either coming from a DVD or from a DVB transport stream) as its input and applies thereto a algorithm to reduce the output bit-rate and/or to add robustness to the video stream itself. Optionally, the xcoder 510a may have multiple output streams, for example when techniques like "Fine Grained Scalability" or "Multiple Descriptions" are applied. The xcoder 510a may also output the video streams using a different video-encoding standard, like, for example, H.264.

Each xcoder output stream is an elementary stream that is split in packets before transmission. This is the purpose of the Network Adaptation Layer/Real-time Transport Protocol (NAL/RTP) block, 520a in Figure 3.

This function may be accomplished according to different criteria, based on detected network conditions. For example, when the WLAN is congested or is very noisy, shorter packets may be more appropriate than larger ones. On the contrary, in good channel conditions, shorter packets coming from the video xcoder 510a may be aggregated into larger ones to reduce the packet header overhead.

Once the video payload has been assembled an RTP header is added and the packet is transmitted using a UDP (Unreliable Datagram Protocol) socket 530a towards the receiving device. In this embodiment, an IP-based wireless network is assumed, where routing is performed based on the Internet Protocol (IP).

The WLAN MAC layer 540a takes care of transmitting the IP packet using the services of the physical layer 550a. Some parameters in the MAC layer 540a can be changed dynamically: for example, when the WLAN is congested, the maximum number of retransmission retries can be reduced leading to better bandwidth utilization.

Also, the MAC layer 540a collects a set of measurements that can be read by the CLC 560 to estimate the conditions of the wireless channel.

The UDP/IP layer 530a communicates with the CLC 560 by means of the RTCP (Real-time Transport Control Protocol) 570.

The corresponding protocol stack 500b at the receiver comprises the elements that are dual to those in the transmitter protocol stack 500a. This protocol stack 500b comprises a decoder 510b, a Network Adaptation Layer/Real-time Transport Protocol (NAL/RTP) block 520b, a UDP/IP layer 530b, a MAC layer 540b and a physical layer 550b.

It will thus be appreciated that various parameters are available at different layers to be dynamically changed in order to adapt the transmission characteristics of an A/V stream to varying wireless network conditions. This is the responsibility of the Cross-Layer Controller 410, whose operations will be described in following.

The Cross Layer Controller (CLC) block 410 is the core module of the system, and it collects information coming from various elements included in the WLANs monitored. That information may include information as to the 802.11 device driver, the RTP/RTCP software module,the streaming module.

Based thereon the controller 410 and it estimates the parameters necessary for an application to optimize its QoS.

Estimating these parameters is not an easy task. The result of estimation depends on two factors:
- the number and accuracy of available statistics. For example an estimate based only on streamer statistics cannot account for packet losses during transmission, while an estimate based on WLAN API (Application Programmers Interface) is usually related only to the first transmission hop (if Access Point centric transmission is used it considers only the station-Access Point link). Moreover in this last case it is not always possible to obtain accurate estimate of the WLAN statistics;
- the algorithms used to obtain the estimates. In general, one of the key parameters to be estimated by the CLC 410 is the bandwidth available for streaming A/V content in a WLAN. This depends i.a. on the number of stations connected to an access point AP, their traffic patterns and their physical positions. Furthermore, the presence of other devices operating in the same radio band can produce interference, whereby packet retransmissions and overall bandwidth reduction may ensue.

An arrangement adapted to efficiently estimate at any time the bandwidth to be used by real-time streaming application is extremely important in this context.

In that respect, it will be appreciated that specific bandwidth estimation method described herein is in no way a mandatory requirement. The adaptive video streaming arrangement described herein can also be used in connection with other mechanisms for determining the available bandwidth.

An exemplary embodiment of a "CLC" - "WLAN" API interface will now be described with reference to network arrangement including at least one element performing the role of a Base Station System (BSS).

Basically, two kinds of statistics can be identified via such an interface: application statistics and BSS load statistics.

The application (per flow) statistics computed at the MAC station level (Layer 2) on a single hop (from the station to the Access Point (AP) or from the Access Point to the station.
- If the application flow connects e.g. a first station (STA1) to a second station (STA2) through the Access P, only the STA1-AP info would be available:
   i) Data loss rate (% of unsent bits) including RTP/UDP/IP headers. The current application data loss rate.
      a. Input parameters: application identifier
      b. Output parameters: data loss rate
   ii) Current throughput. Total number of bits successfully transmitted in a second. This is a Layer 2 throughput, includes RTP/UDP/IP headers.
      c. Input parameters: application identifier
      d. Output parameters: throughput
   iii) Maximum physical data rate. It is the physical data rate used by the card over a link; mostly all commercial cards change at runtime this value according to channel conditions.
      e. Input parameters: application identifier
      f. Output parameters: physical data rate
   iv) Transmitted packet rate. Number of packets transmitted in a second.
      g. Input parameters: application identifier
      h. Output parameters: transmitted packet rate
- BSS load statistics; these parameters have been included in recent versions of 802.11e standard (>4.3) to provide an indication of BSS load condition.
   v) Channel utilization. The percentage of time the Access Point (AP) sensed the medium busy, as indicated by either the physical or virtual carrier sense mechanism. It can provide information about the congestion level of the cell.
   vi) Available admission capacity. It specifies the remaining amount of bandwidth capacity available in a BSS.
   vii) Station count. The station count indicates the total number of STAs currently associated with this BSS.

In the following, the "CLC" - "RTP/RTCP" interface CLC-WLAN API interface is described.

The RTCP RR are the RTCP Receiver Reports (see RFC 3550 at http://www.ietf.org) provided by the "RTP/RTCP" block. The UCL library function to be called by the "CLC" in order to get the RR messages is rtp_get_rr().

The RR (Receiver Reports) packets can give feedback about end-to-end transmission between the sender(s) and the receiver(s) by means of the following information:
- The fraction of packets lost within the RTP stream. Each receiver calculates the number of RTP packets lost divided by the number of RTP packets sent as part of the stream.
- The last sequence number received in the stream of RTP packets.
- The inter-arrival jitter, which is calculated as the average inter-arrival time between successive packets in the RTP stream.

The RTCP APP are the RTCP Application specific packets (see RFC 1889 at http://www.ietf.org) provided by the "RTP/RTCP" block. APP packets could include parameters read from the MAC and PHY layer of the generating 802.11 entity (Station or Access Point). APP packets may be generated both by the sender(s) and the receiver(s). Each end point can thus get information about its local MAC parameters, and about the parameters of its peer. RTCP APP use is optional since they would use proprietary protocol format.

Now a description of the "CLC" - "Transcoder" interface is given by means of some parameter definitions:
- Suggested bit-rate: the maximum bit-rate that an application could use. The estimation should be used by the application to adapt its output bit-rate.
- Data loss rate: this indicates the data loss rate, i.e. the percentage of data that the receiver application did not get. The transcoder may use this parameter to adapt encoding robustness.
- Optimal packet size: this is the packet size that the streamer should use.
   Finally, the description of the "CLC"- "Streamer" interface is reported here in terms of parameter descriptions.
- Streaming bit-rate: this is' the bit-rate measured by the streaming module, calculated as the amount of bits sent to the UDP buffer in a second. The UDP buffer works in write blocking modality when full. It does not include RTP/UDP/IP headers.
- Transmitted packet rate: this refers to the number of packets sent to UDP buffer in a second.
- Streaming buffer filling: this indicates' the level of filling of the streaming buffer.
- Recommended Streaming bit-rate: the CLC may tell the streamer to change the streaming bit-rate: in some cases this value may be different from the transcoding bit-rate.
- Data loss rate.
- Streaming packet size: the CLC may request the streamer to adapt the packet size.

Operation of the arrangement described herein is organized in four basic steps or phases.

### STEP OR PHASE 1 - Collection of statistics

The CLC 401 periodically collects all the available statistics about the specific flow in which the transcoder is involved. The different kinds of statistics come from the WLAN driver, the RTP/RTCP block and the Streamer block. As a rule, no guarantee exsists that all of them are available at the same time in operating environment. In particular, if the receiving station does not support RTCP, then the CLC cannot rely on RTCP statistics.

The time period of updating these statistics is chosen as follows.

According to RFC1889 the RTCP statistics are available only each 5 seconds, so this is the minimum time interval to update them; however in RFC3550 this limit no longer exists for high bit-rates, so RTCP statistics are available each 360/br seconds, where br is the flow bit-rate expressed in kilobits per second.

WLAN statistics: the time period is set to 1 second, therefore the WLAN API will return the Layer 2 throughput, packet loss rate, etc, averaged over 1 second.

Streamer statistics: the time period is set equal to 1 second.

### STEP OR PHASE 2 - Statistics processing

The statistics collected are then processed in order to compute an average of them over a certain number of consecutive samples (each of them collected during the previous step or phase). The number of samples and the kind of average are chosen as follows.

RTCP statistics: no processing is performed; content of RTCP reports is used as it is.

WLAN statistics:
- the number of samples is set to 10. With the sampling period set to 1 second, it means that the average is computed over a time interval of 10 seconds.
- the average is an arithmetic average.

Streamer statistics. No processing is done: the values returned by the Streamer are supposed already averaged.

The statistics are used to derive an average of the application throughput, data loss rate (DLR), delay and available bandwidth. These data can be compared with expected values in order to understand if adjustments to runtime application parameters are required.

Operation of the arrangement described herein is totally independent of specific method used to compute application throughput, DLR, delay and available bandwidth. An example of a possible way to estimate these values is thus described just by way of reference. As already indicated, other methods can be used, without compromising the validity of the overall adaptive streaming solution.

The simplified exemplary algorithm described herein is driven by the observed transmission buffer levels and by MAC-level statistics provided by the WLAN device driver.

Other strategies may also take into account:
- explicit indications of bit-rate requested by the application by means of suitable protocols (RSVP, UPnP) ;
- QoS Service Level Agreement violations: whenever a negotiated bit-rate (or delay or delay variation) cannot be met by the lower layers because of a congested wireless network, explicit signals are risen and can be handled at the application level by the bandwidth estimator;
- TCP-friendly RTP rate control algorithms that take round trip time (RTT) into account;
- Explicit packet loss notifications sent by the receiver;
- Explicit RTP packet retransmission requests sent by the application at the receiver.

### STEP OR PHASE 3 - Computation of suggested bit-rate and optimal packet size

This phase can be divided in two sub-steps.

A first sub-step performs the computation of the suggested bit-rate for each streaming application (transcoder and streamer couple).

Assumption (i): a priority index is assigned to each streaming application (or flow), the CLC 401 will consider this field when allocates resources to flows.

Assumption (ii): only a discrete number of bit-rate values in the range between the full video quality bit-rate and the minimum video quality bit-rate can be suggested to the transcoder as working bit-rate, instead of the overall range of values between the same limits. The minimum video quality bit-rate is the minimum value of bit-rate for a flow. The transcoder does not try to further decrease the transcoding bit-rate under this value. If this value cannot be guaranteed (e.g. due to lack of bandwidth over the network), then the flow should be paused or turned off.

Assumption (iii): it is assumed that a scheduler exist able to allocate time slots to the different flows according to their bit-rate requirements.

The goal of the following approach is to guarantee at least the minimum bit-rate for each flow, and to allocate the remaining bandwidth to the flows with highest priority. This is achieved also by monitoring the streaming buffer filling: when growing it means that the available bandwidth is less than the required value (and vice versa). Under the previous assumptions, the bit-rate for the transcoders and the streamers are computed, as shown in the following pseudo-code, by way of procedures using well known instructions for BASIC language:

LET F1 a threshold defined for each flow on the basis of its characteristics

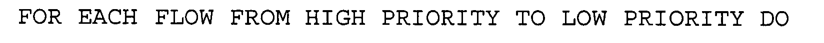

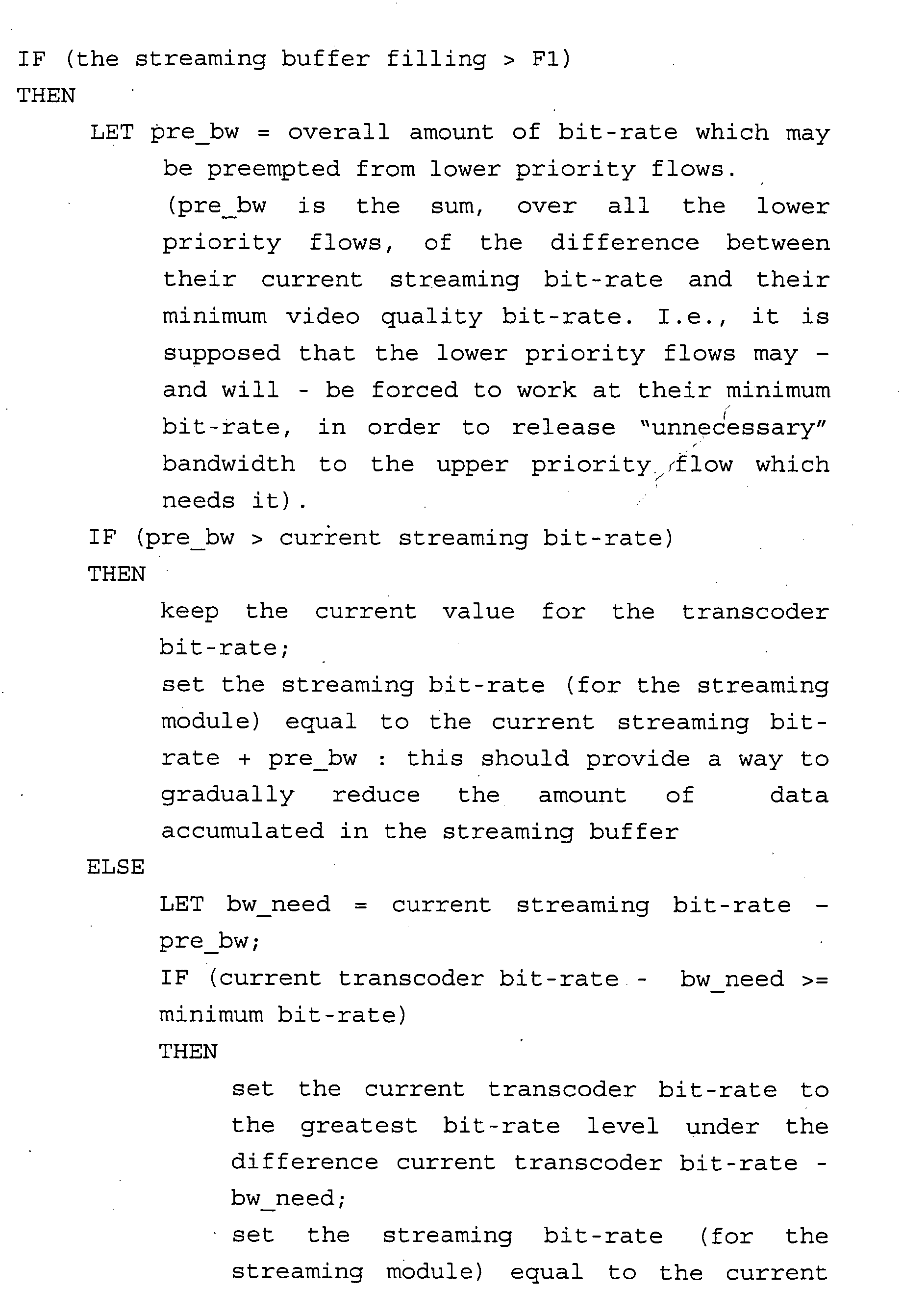

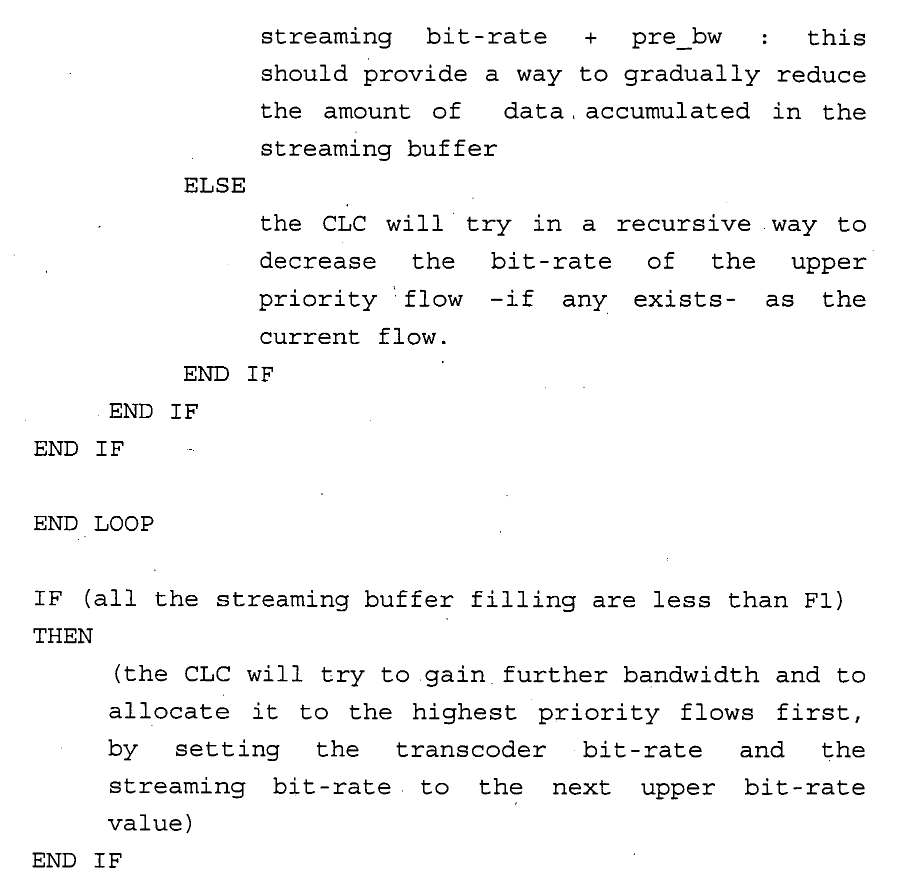

The subsequent sub-step or sub-phase performs the computation of optimal packet size. If statistics about different packet sizes and related PER over a specified link are available, then the maximum packet size that guarantees the expected PER is considered the optimal packet size. If such statistics do not exist or no packet size guarantees the expected PER, than the application packet size is divided by two until the expected PER is obtained or the minimum packet size is reached.

### STEP OR PHASE 4 - Communication of computed parameters to the transcoder

This step can be performed by any Inter-Process Communication method. The CLC 401 sends to the transcoder a message formatted as follows: 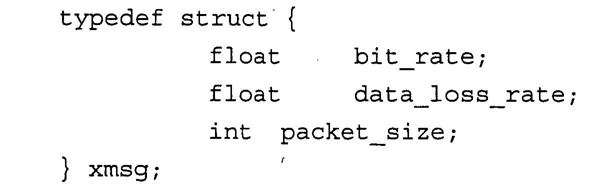 A special value (-1) is set in the field when it is not available

Upon receiving the message, the transcoder is expected:
- to change the transcoding process,
- to communicate the new target bit-rate to the Streamer; of course the new target bit-rate cannot be greater than the original target bit-rate (i.e., the bit-rate of the original video stream).

Preferably, any transcoder included in the arrangement described herein should be able to optimize quantization, frame rate and size for optimal view given the image content and the net rate available on the channel. The transcoder will indicate the maximum bit-rate (the bit-rate that the transcoder should produce, in terms of raw video data, i.e. the payload of the network packets only, before any header insertion) and optimal packet size. The transcoder will decide, based on the Q parameter, on the sequence content and on target rate, if to perform frame size reduction and/or frame rate reduction, according to the following pseudo code instructions:
if (bit-rate< TH1)
then reduce_frame_rate_and_frame_size();
else if (bit-rate< TH2)
then reduce_frame_size();
else if (bit-rate< TH3)
then reduce_frame_rate();
else
keep_original_frame_rate_and_size();
TH1, TH2, TH3 are three empirical Thresholds, with TH1<TH2<TH3.

After establishing what one out of the four conditions is verified, the transcoder will adapt the quantization step to achieve the desired output bit-rate.

The transcoder will also adapt the slicing structure to the network requirements. For example, in case of small packets, the transcoder will typically split larger slices into smaller ones. In case of negligible data_loss_rate, the transcoder could, in case of small slices, fuse them together (as much as allowed by MPEG-2 standard).

The arrangement described herein can be advantageously applied to WLAN access points that are optimized to support video streaming services (in the home or in other environments).

In Figure 4, a simplified block diagram of the hardware 600 and software 700 structures of a related access point is given.

The main hardware blocks of the access point are an Ethernet card 610, one or more Wireless LAN card(s) 620, a CPU 630, a Flash memory 640 and a dynamic memory 650. The WLAN 620 and Ethernet 610 cards may be connected through a PCI bridge (not shown in the picture for simplicity). Their typical behaviour is transmitting and receiving Ethernet frames from/to the memory using DMA (Direct Memory Access) access and CPU interrupts.

In the CPU 630 (which usually boots an operating system from flash memory upon startup) device drivers take care of handling Ethernet frames both in transmission and reception by preparing/checking their headers and copying their payload into OS 750 (Operating System) specific data structures.

Usually, bridging software 760 in the access point takes care of forwarding frames from one network interface to another.

Furthermore, the Access Point AP usually includes an SNMP (Simple Network Management Protocol) agent 710 that enables remote control of the device, authentication software 720 to give access only to allowed clients, an IP stack 730 (to enable remote monitoring through SNMP) and a Web browser 740 for configuration purposes.

The present invention is applicable not only to traditional WLAN access points, but also to such devices as Set-Top Boxes, TV sets, Personal Computers or other equipment that are adapted to act as a WLAN access point.

This invention provides adaptive video streaming in a Wireless LAN so that a video stream bit-rate can be varied, video format resized or frames skipped depending on the channel conditions measured.

Consequently, without prejudice to the underlying principles of the invention, the details and the embodiments may vary, also appreciably, with reference to what has been described by way of example only, without departing from the scope of the invention as defined by the claims that follow.

## Claims

1. A method of controlling operation of a network (200, 300) wherein at least one information stream is delivered to at least one user (250, 260; 350, 360) via at least one link exposed to variable operating conditions, the method including the steps of:
- monitoring the operating conditions (400, 410) of said at least one link, and
- selectively transcoding (210, 310) said at least one information stream by selectively varying at least one transcoding parameter as a function of said operating conditions monitored.

2. The method of claim 1, **characterized in that** said at least one link is a wireless link.

3. The method of either of claims 1 or 2, **characterized in that** said at least one link is included in a local area network (LAN-200, 300).

4. The method of claim 3, **characterized in that** said at least one link is included in a wireless LAN (WLAN-200, 300) .

5. The method of claim 1, **characterized in that** said information stream is a media stream.

6. The method of claim 5, **characterized in that** said stream is selected out of an audio stream, a video stream and an audio/video stream.

7. The method of claim 6, **characterized in that** said stream is an MPEG or H.264 encoded stream.

8. The method of claim 1, **characterized in that** said at least one parameter is selected out of the group consisting of: the bit-rate of said stream, the spatial resolution of said stream, the temporal resolution of said stream.

9. The method of any of the previous claims, **characterized in that** it includes the steps of:
- estimating (410) the bandwidth available for transmitting said at least one stream over said at least one link, and at least one of:
- varying the bit-rate of said information stream, and
- splitting the content of said stream transmission packets according to said estimated available bandwidth.

10. The method of claim 1, **characterized in that** said at least one stream is a video stream and said transcoding (210; 310) involves GOP-by-GOP processing of said at least one information stream.

11. The method of claim 1, **characterized in that** said step of monitoring the operating conditions of said at least one link involves detecting at least one of said link being congested and said link being noisy, and **in that** said step of transcoding includes transmitting said information stream in the form of packets by making the lengths of said packets shorter as said at least one link becomes more congested and/or noisy.

12. The method of any of the previous claims, **characterized in that** said transcoding involves the steps of generating corresponding transmitter (500a) and receiver (500b) protocol stacks for IP packet transmission, said stacks being arranged in a cross-layer-controlled arrangement including:
- a transcoder layer (510a, 510b),
- a network adaptation/real-time transport protocol layer (520a, 520b),
- a UDP/IP layer (530a, 530b),
- a MAC layer (540a, 540b), and
- a physical layer (550a, 550b).

13. The method of claim 1, **characterized in that** said step of monitoring the operating conditions of said at least one link includes monitoring at least one of the entities selected from the group consisting of:
- data loss rate over said link,
- current throughput over said link, and
- maximum physical data rate over said link.

14. The method of claim 1, **characterized in that** said at least one link involves a base station (BSS), and said step of monitoring the operating conditions of said at least one link involves monitoring at least one entity selected out of the group consisting of:
- channel utilization over said link,
- available admission capacity over said at least one link, and
- total number of STAs associated with said base station (BSS).

15. A system for controlling operation of a network (200, 300) wherein at least one information stream is delivered to at least one user (250, 260; 350, 360) via at least one link exposed to variable operating conditions, the system including:
- a controller module (410) configured for monitoring the operating conditions (400, 410) of said at least one link, and
- at least one transcoder (210, 310) configured for selectively transcoding (210, 310) said at least one information stream by selectively varying at least one transcoding parameter as a function of said operating conditions monitored.

16. The system of claim 15, **characterized in that** said at least one link is a wireless link.

17. The system of either of claims 15 or 16, **characterized in that** said at least one link is included in a local area network (LAN-200, 300).

18. The system of claim 17, **characterized in that** said at least one link is included in a wireless LAN (WLAN-200, 300).

19. The system of claim 15, **characterized in that** said information stream is a media stream.

20. The system of claim 19, **characterized in that** said stream is selected out of an audio stream, a video stream and an audio/video stream.

21. The system of claim 20, **characterized in that** said stream is an MPEG or H.264 encoded stream.

22. The system of claim 15, **characterized in that** said at least one transcoder (210, 310) is configured for selecting said at least one parameter out of the group consisting of: the bit-rate of said stream, the spatial resolution of said stream, the temporal resolution of said stream.

23. The system of any of the previous claims 15 to 22, **characterized in that** the system is configured for:
- estimating (410) the bandwidth available for transmitting said at least one stream over said at least one link, and at least one of:
- varying the bit-rate of said information stream, and
- splitting the content of said stream transmission packets according to said estimated available bandwidth.

24. The system of claim 14, **characterized in that** said at least one stream is a video stream and said at least one transcoder (210; 310) is configured for GOP-by-GOP processing of said at least one information stream.

25. The system of claim 15, **characterized in that** said controller module (410) is configured for monitoring the operating conditions of said link by detecting at least one of said link being congested and said link being noisy, and **in that** said at least one transcoder (210, 310) is configured for transmitting said information stream in the form of packets by making the lengths of said packets shorter as said at least one link becomes more congested and/or noisy.

26. The system of any of the previous claims 15 to 25, **characterized in that** said at least one transcoder (210, 310) is configured for generating corresponding transmitter (500a) and receiver (500b) protocol stacks for IP packet transmission, said stacks being arranged in a cross-layer-controlled arrangement including:
- a transcoder layer (510a, 510b),
- a network adaptation/real-time transport protocol layer (520a, 520b),
- a UDP/IP layer (530a, 530b),
- a MAC layer (540a, 540b), and
- a physical layer (550a, 550b).

27. The system of claim 15, **characterized in that** said controller module (410) is configured for monitoring at least one of the entities selected from the group consisting of:
- data loss rate over said link,
- current throughput over said link, and
- maximum physical data rate over said link.

28. The system of claim 15, **characterized in that** said at least one link involves a base station (BSS) , and said controller module (410) is configured for monitoring at least one entity selected out of the group consisting of:
- channel utilization over said link,
- available admission capacity over said at least one link, and
- total number of STAs associated with said base station (BSS).

29. A communication network including a system according to any of claims 15 to 28.

30. A computer program product loadable in the memory of at least one computer and including software code portions for performing the method of any of claims 1 to 14.
